# EUROPEAN PATENT APPLICATION

(11) **EP 4 844 627 A1**
(43) Date of publication of application: **25.11.2026**
(21) Application number: 26178871.5
(22) Date of filing: 15.05.2026
(51) Int. Cl.: G06F 40/30, G06F 21/62

(54) **AI-BASED PRIVACY-PRESERVING SYNTHETIC DATA GENERATION**

(30) Priority: 22.05.2025 US 202519215888
(71) Applicant: Microsoft Technology Licensing, LLC, Redmond, WA 98052 (US)
(72) Inventor: JOSHI, Dhruv, Redmond, Washington, 98052 (US); SIM, Robert, Redmond, Washington, 98052 (US); RAMASESHAN, Varshini, Redmond, Washington, 98052 (US); YEKHANIN, Sergey, Redmond, Washington, 98052 (US); CEGIELSKI JOHNSON, Maksymilian Aleksander Filip, Redmond, Washington, 98052 (US); LIN, Zinan, Redmond, Washington, 98052 (US)
(74) Representative: CMS Cameron McKenna Nabarro Olswang LLP

(57) **Abstract**

A data processing system implements prompting a first generative AI model to generate random sample data based on seed data; inputting the random sample data and private data to a second generative AI model; prompting the second generative AI model to iteratively generate differential privacy (DP) synthetic data into a last iteration DP synthetic data by: determining a semantic similarity score per synthetic sample in the DP synthetic data, selecting synthetic sample(s) with higher semantic similarity scores among the DP synthetic data, generating a plurality of variations for each of the selected synthetic sample(s), and using the variations for a subsequent iteration, the semantic similarity score being determined based on one or more semantic similarity criteria between the synthetic sample and a private sample in the private data; and applying the last iteration DP synthetic data to improve at least one of an AI model or an AI system.

## Description

### BACKGROUND

Artificial intelligence (AI) has been applied to automate human lives and to increase productivity. Text data is crucial for AI development and training, but privacy concerns limit access to high-quality private datasets. On the other hand, data privacy in AI applications is crucial to protect individuals' sensitive information, ensure ethical use of data, and maintain trust in AI systems. To balance the competing interests, differential privacy (DP) is applied to generate synthetic replicas of private text data by adding controlled noise to the private text data. Generating synthetic text with DP offers a scalable solution, although many methods require DP fine-tuning of large language models (LLMs), which is impractical for proprietary models and resource-intensive for open-source ones. An augmented private evolution (Aug-PE) algorithm thus was introduced to generate DP synthetic text data with application programming interface (API) access to an LLM, without any model training. However, there is room to improve Aug-PE. For example, Aug-PE simply compares embeddings of the private and synthetic samples in a black box way which presents drawbacks such as lack of transparency and interpretability, customization limits, and the like. Hence, there is a need for improving systems and methods of AI-based privacy-preserving synthetic data generation beyond Aug-PE.

### SUMMARY

An example data processing system according to the disclosure includes a processor and a machine-readable medium storing executable instructions. The instructions when executed cause the processor alone or in combination with other processors to perform operations including prompting a first generative artificial intelligence (AI) model to generate random sample data based on seed data; inputting the random sample data and private data to a second generative AI model; prompting the second generative AI model to iteratively generate differential privacy (DP) synthetic data into a last iteration DP synthetic data by: determining a semantic similarity score per synthetic sample in the DP synthetic data, selecting one or more synthetic samples with higher semantic similarity scores among the DP synthetic data, generating a plurality of variations for each of the selected one or more synthetic samples, and using the variations for a subsequent iteration, wherein the semantic similarity score is determined based on one or more semantic similarity criteria between the synthetic sample and a private sample in the private data; and applying the last iteration DP synthetic data to improve at least one of an AI model or an AI system.

An example method implemented in a data processing system includes prompting a first generative artificial intelligence (AI) model to generate random sample data based on seed data; inputting the random sample data and private data to a second generative AI model; prompting the second generative AI model to iteratively generate differential privacy (DP) synthetic data into a last iteration DP synthetic data by: determining a semantic similarity score per synthetic sample in the DP synthetic data, selecting one or more synthetic samples with higher semantic similarity scores among the DP synthetic data, generating a plurality of variations for each of the selected one or more synthetic samples, and using the variations for a subsequent iteration, wherein the semantic similarity score is determined based on one or more semantic similarity criteria between the synthetic sample and a private sample in the private data; and applying the last iteration DP synthetic data to improve at least one of an AI model or an AI system.

An example non-transitory computer readable medium data processing system according to the disclosure on which instructions are stored that, when executed, cause a programmable device to perform functions of prompting a first generative artificial intelligence (AI) model to generate random sample data based on seed data; inputting the random sample data and private data to a second generative AI model; prompting the second generative AI model to iteratively generate differential privacy (DP) synthetic data into a last iteration DP synthetic data by: determining a semantic similarity score per synthetic sample in the DP synthetic data, selecting one or more synthetic samples with higher semantic similarity scores among the DP synthetic data, generating a plurality of variations for each of the selected one or more synthetic samples, and using the variations for a subsequent iteration, wherein the semantic similarity score is determined based on one or more semantic similarity criteria between the synthetic sample and a private sample in the private data; and applying the last iteration DP synthetic data to improve at least one of an AI model or an AI system.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. Furthermore, the claimed subject matter is not limited to implementations that solve any or all disadvantages noted in any part of this disclosure.

### BRIEF DESCRIPTION OF THE DRAWINGS

The drawing figures depict one or more implementations in accord with the present teachings, by way of example only, not by way of limitation. In the figures, like reference numerals refer to the same or similar elements. Furthermore, it should be understood that the drawings are not necessarily to scale.
FIG. 1 is a diagram of an example computing environment in which the techniques for fine-tuning generative AI models for tasks are implemented.
FIG. 2 is a conceptual diagram of AI-based privacy-preserving synthetic data generation for fine-tuning generative AI models for tasks implemented by the application services platform shown in FIG. 1.
FIG. 3 is a conceptual diagram of a DP synthetic sample and LLM action generation process implemented in FIG. 2.
FIG. 4 is a flow chart of an example process for fine-tuning generative AI models for tasks according to the techniques disclosed herein.
FIG. 5 is a block diagram showing an example software architecture, various portions of which may be used in conjunction with various hardware architectures herein described, which may implement any of the described features.
FIG. 6 is a block diagram showing components of an example machine configured to read instructions from a machine-readable medium and perform any of the features described herein.

### DETAILED DESCRIPTION

Systems and methods for improving AI-based privacy-preserving synthetic data generation are described herein. These techniques provide a technical solution to improve differentially private synthetic text generation (e.g., Aug-PE), including comparing the private and synthetic samples based on sematic similarity.

Differential privacy is a framework that enables data analysis while protecting individual privacy. To achieve this, it introduces randomness into the data or computation process so that the output does not reveal whether any individual's or group of individuals' data was included. A common technique is adding noise to statistical results, often using distributions like Laplace or Gaussian. This noise is calibrated based on a parameter called the privacy budget (ε), which quantifies the trade-off between privacy and accuracy. Smaller values of ε mean more privacy, but potentially less useful results.

Aug-PE generates differentially private synthetic text with similar characteristics to the original private data while ensuring privacy by protecting sensitive information in each sample, thereby developing a downstream natural language processing (NLP) system without adding extra privacy risks. For example, Aug-PE can be applied to generate synthetic AI agent text conversation datasets. Aug-PE computes cosine similarity metric of the embeddings of the private and synthetic data. However, cosine similarity metrics often do not represent true semantic similarity of the synthetized text at each epoch along the dimensions most important to the scenario.

To address these technical problems, the system generates DP synthetic data based on semantic similarity criteria/rubrics instead of cosine similarity. Examples of semantic similarity criteria/rubrics include intent, document type, phrasing, idiomatic expression, length, specificity, persona, tone, style, domain specific term, written quality, and the like. The system prompts a GenAI model (e.g., an off-the-shelf LLM) to iteratively improve DP synthetic data by comparing the DP synthetic data with private data based on semantic similarity criteria to private data, and selecting synthetic samples with higher semantic similarity among the DP synthetic data for a subsequent iteration. An off-the-shelf LLM is a pre-trained, ready-to-use language model provided by a third party, designed for general-purpose tasks without requiring custom training.

In one implementation, in place of computing cosine similarity metric of the embeddings of the private and synthetic data, the system uses a predefined LLM rubric to compute semantic similarity criteria of the plain text itself along various dimensions/rubrics, such as "intent is similar", "document type is similar", "phrasing is similar", "idiomatic expressions are similar", and the like. Such semantic similarity is scored from 0 to 100 by an LLM judge. As opposed to Aug-PE, the semantic-similarity-based DP synthetic data generation approach applies the semantic similarity criteria to judge/determine a similarity between the synthetized text and target private text at each epoch along dimensions most important to the scenario. In addition, the semantic similarity scores can be weighted based on importance. Differentially private noise is added to the votes as a part of these semantic similarity scores.

Another aspect includes the LLM creating short instructions at each iteration thereby guiding privacy-preserving synthetic data generation, as well as suggesting actions for additional synthetic data generation thereby guiding model action generation, both of which lead to better results with more semantic similarity. During each iteration, the system prompts the LLM to generate model actions to make the DP synthetic data even more semantically similar to the private data. For instance, each rubric element is associated with a specific action that the LLM takes at each epoch to vary and perturb the DP synthetic data towards being more similar to the private data. For example, the specific rubric item "idiomatic expressions are similar" having a lower score is used to tell the LLM to generate more examples using idiomatic expressions at the next epoch of synthetic data generation. Other LLM actions include changing sample length, intent, specificity, persona, tone/style, domain specific words, quality (e.g., well written/spelling errors/more human sounding), cosine similarity of embeddings, and the like.

As long as each rubric item and its corresponding action are pre-defined and go through a vetting process to be low-risk of losing privacy, these inherit the same privacy guarantees as the previous iteration to not leak private information.

In addition, during each iteration, the system prompts the LLM to use the private data to guide the model action generation process while applying DP. Since LLMs can potentially leak or reproduce private examples included in prompts, the system creates synthetic few-shot demonstrations from a private dataset thereby providing formal DP guarantees. In particular, when the system asks the LLM at each iteration to share back short instructions regarding what action(s) to take to make the DP synthetic data and the private data similar based on its analysis of their sematic difference, differentially private techniques are applied in a completely unsupervised manner. The process of the LLM generating those actions back itself utilizes differential privacy to reduce risk of the LLM leaking verbatim private or confidential information.

Although various embodiments are described with respect to generating DP synthetic text data, it is contemplated that the approach described herein may be applied to generating other DP synthetic data types/formats, such as audio, images, video, sensor data (e.g., temperature, motion, GPS, etc.), biological signals (e.g., EEG, ECG, or genetic sequences), tactile or haptic feedback (e.g., pressure, touch, vibration), time-series data from wearables or IoT devices, structured data (e.g., tables, databases, spreadsheets, or telemetry data), motor commands for robotics, environmental data (e.g., weather, air quality), thermal imaging, LiDAR and radar signals, 3D spatial data and point clouds, and the like.

A technical benefit of the approach provided herein is to generate more diverse and high-quality DP synthetic data at a higher speed than Aug-PE, by replacing cosine similarity with semantic similarity criteria. In other words, as opposed to trusting the embedding model in a black box based on cosine similarity, AI-based semantic similarity judging provides more content relevant results in a smarter feedback loop at each epoch to better guide the DP data synthesis.

Another technical benefit of the approach provided herein is to use a GenAI model (e.g., LLM) as a semantic similarity judge instead of simply comparing embeddings of the private and synthetic samples, thereby bringing significant flexibility to the implementation.

Another technical benefit of this approach provided herein is to further improve the speed and quality of the privacy-preserving synthetic data, by prompting the LLM to generate model actions to make the DP synthetic data even more semantically similar to the private data during each iteration.

Another technical benefit of this approach provided herein is to guide model action generation using private data, by prompting the LLM to use the private data to guide the model action generation process while applying DP.

Yet another technical benefit of this approach is to keep the LLM judge as an off-the-shelf stock model, which doesn't retain any private knowledge and is only used in inferencing mode. As such, no AI model needs to be fine-tuned at any stage, and there is much less risk of any private information leak. These and other technical benefits of the techniques disclosed herein will be evident from the discussion of the example implementations that follow.

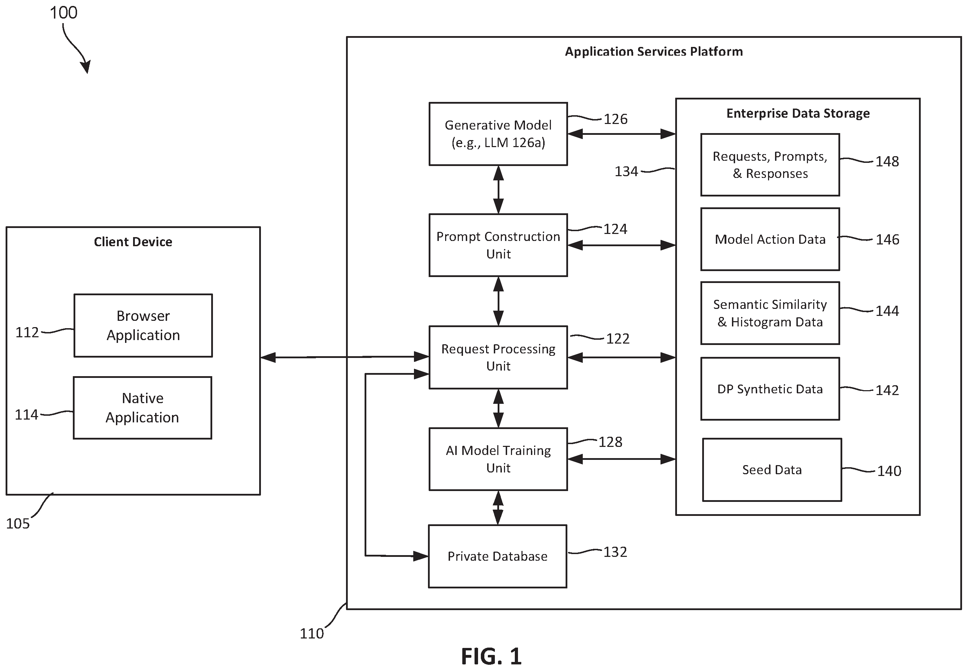

FIG. 1 is a diagram of an example computing environment 100 in which the techniques herein may be implemented. The example computing environment 100 includes a client device 105 and an application services platform 110. The application services platform 110 provides one or more cloud-based applications and/or provides services to support one or more web-enabled native applications on the client device 105. These applications may include but are not limited to productivity applications (e.g., office productivity applications like Word^{®}), presentation applications, website authoring applications, collaboration platforms, communications platforms, and/or other types of applications in which users may fine-tune a generative AI model for different tasks (e.g., question answering, summarization, machine translation, text generation tailored to a specific domain or style, sentiment analysis, topic detection, named entity recognition (NER), and the like). In the implementation shown in FIG. 1, the application services platform 110 also applies generative AI to generate high quality DP synthetic data from seed data according to the techniques described herein. Seed data (e.g., an anonymized restaurant review dataset) is a simplified real dataset that the DP mechanism can learn from while preserving privacy.

In one embodiment, the application services platform 110 is independently implemented on the client device 105. In another embodiment, the client device 105 and the application services platform 110 communicate with each other over a network (not shown) to implement the system. The network may be a combination of one or more public and/or private networks and may be implemented at least in part by the Internet.

The client device 105 is a computing device that may be implemented as a portable electronic device, such as a mobile phone, a tablet computer, a laptop computer, a portable digital assistant device, a portable game console, and/or other such devices in some implementations. The client device 105 may also be implemented in computing devices having other form factors, such as a desktop computer, vehicle onboard computing system, a kiosk, a point-of-sale system, a video game console, and/or other types of computing devices in other implementations. While the example implementation illustrated in FIG. 1 includes a single client device 105, other implementations may include a different number of client devices that utilize services provided by the application services platform 110.

As used herein, the term "private data" refers to individual-level or group-of-individuals-level information that must be protected from disclosure, in the presence of analysis or data release, and the term "differentially private synthetic data" refers to artificially generated data that mimics the statistical properties of real data while incorporating differential privacy techniques to ensure that no individual's information can be re-identified. It allows data analysis and sharing without compromising personal privacy.

The client device 105 includes a native application 114 and a browser application 112. The native application 114 is a web-enabled native application, in some implementations, which enables users to view, create, and/or modify content item summaries. The web-enabled native application utilizes services provided by the application services platform 110 including but not limited to obtaining content item summary data, and fine-tuning a generative AI model for various types of content item summaries using the content item summary data. In other implementations, the browser application 112 is used for accessing and viewing web-based content provided by the application services platform 110. In such implementations, the application services platform 110 implements one or more web applications, such as the browser application 112, that enables users to generate differentially private synthetic data based on semantic similarity which is then used to fine-tune a generative AI model for different tasks. The application services platform 110 supports both the native application 114 and the browser application 112 in some implementations, and the users may choose which approach best suits their needs.

In one embodiment, the application services platform 110 includes a request processing unit 122, a prompt construction unit 124, a generative AI model 126, and an AI model training unit 128. In other embodiments, the application services platform 110 also includes a private database 132, an enterprise data storage 134, and/or moderation services.

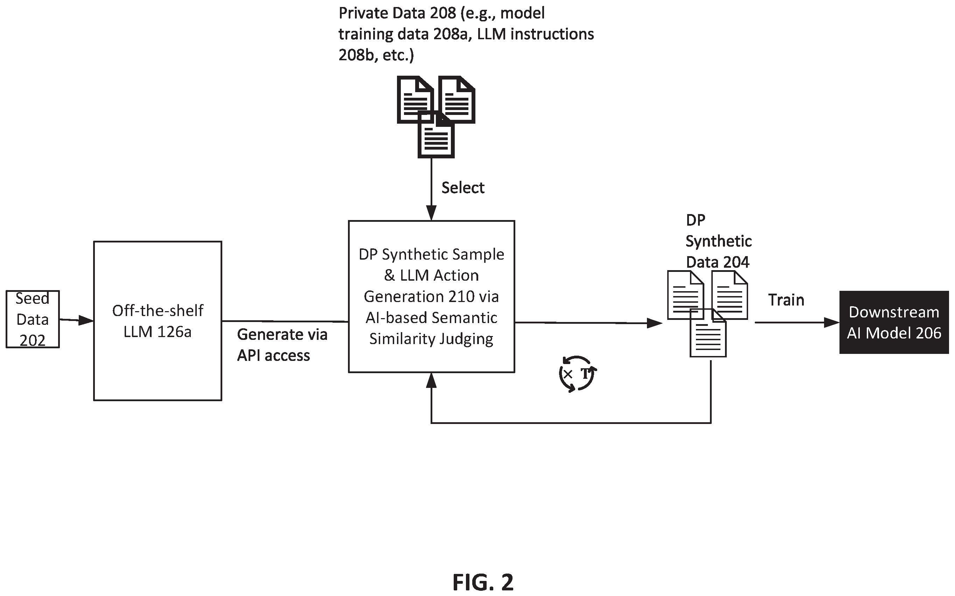

The request processing unit 122 is configured to receive requests from the native application 114 and/or the browser application 112 of the client device 105. The requests may include but are not limited to requests to generate DP synthetic data for fine-tuning a downstream AI model for a specific task (explained in detail in conjunction with FIG. 2), and/or to send natural language prompts to the generative AI model 126 to generate a content item summary using the fine-tuned model according to the techniques provided herein. The generative AI model 126 can be selected for a use case considering the specific knowledge base, the availability of pre-trained models, and the like. The request processing unit 122 also coordinates communication and exchange of data among components of the application services platform 110 as discussed in the examples which follow.

The prompt construction unit 124 is responsible for creating and refining prompts to interact effectively with the generative AI model 126. This involves designing input instructions that guide the generative AI model 126 to facilitate the AI-based privacy-preserving synthetic data generation. The key tasks of the prompt construction unit 124 include working in conjunction with the AI model training unit 128 to construct prompts to an AI model (e.g., the LLM 126a) to generate DP synthetic data, model action recommendations, and the like. In one implementation, in response to a user request, the prompt construction unit 124 calls the fined-tuned model to summarize a content item.

In one embodiment, the generative AI model 126 is a language model trained to execute the prompts from the prompt construction unit 124 facilitating the AI-based privacy-preserving synthetic data generation, and/or to generate content (e.g., textual, spreadsheet, chart, report, audio, image, video, and the like) in response to natural language prompts input by a user via the native application 114 or via the web. For instance, the generative AI model 126 is implemented using an LLM in some implementations. Examples of such models include but are not limited to Generative Pre-trained Transformer 4 (GPT-4), Claude^{®}, BERT^{®} (Bidirectional Encoder Representations from Transformers), Falcon 40B^{®}, Gemini^{®}, CodeWhisperer^{®}, and the like. Other implementations may fine-tune other generative AI models for tasks according to the AI-based privacy-preserving synthetic data generation.

The AI model training unit 128 performs many functions of the AI-based privacy-preserving synthetic data generation. In one implementation, a user (e.g., a software developer) activates a command line interface (CLI) tool on a user interface of the client device 105, and then inputs via the CLI a user request to fine-tune an LLM 126a for a content item summary task (e.g., to summarize the tasks due today involving a specific team in an enterprise schedule) based on DP synthetic data generated using the AI-based semantic similarity judging.

The request processing unit 122 receives the user request to generate DP synthetic data for fine-tuning a target AI model. For instance, the request processing unit 122 implements the AI-based privacy-preserving synthetic data generation using python. FIG. 2 is a conceptual diagram of applying such AI-based privacy-preserving synthetic data generation for fine-tuning the target AI model for a specific task. For instance, the synthetic data generation can be implemented by the application services platform 110, using seed data 202 retrieved from an external database (e.g., Yelp) and/or the enterprise data storage 134. For instance, the enterprise data storage 134 stores seed data 140 (including the seed data 202), DP synthetic data 142, semantic similarity and histogram data 144, model action data 146, and request, prompts and responses 148.

FIG. 2 is a conceptual diagram of AI-based privacy-preserving synthetic data generation for fine-tuning generative AI models for tasks implemented by the application services platform shown in FIG. 1. Continuing with the example task of content item summarization, the AI model training unit 128 applies the AI-based privacy-preserving synthetic data generation in FIG. 2 to generate DP synthetic data 204 in order to fine-tune a downstream AI model 206 in response to the user request. The user request can be saved in the enterprise data storage 134 as a part of the request, prompts and responses 148.

Although various embodiments are described with respect to fine-tuning a downstream AI model, it is contemplated that the approach described herein may be applied to test an AI system, evaluate an AI system, detect at least one AI system issue, diagnose at least one AI system issue, model a custom AI system, simulate an AI model, publish metrics of feature usage of an AI system, simulate end-user content, behavior, or interaction with a computing system, and the like.

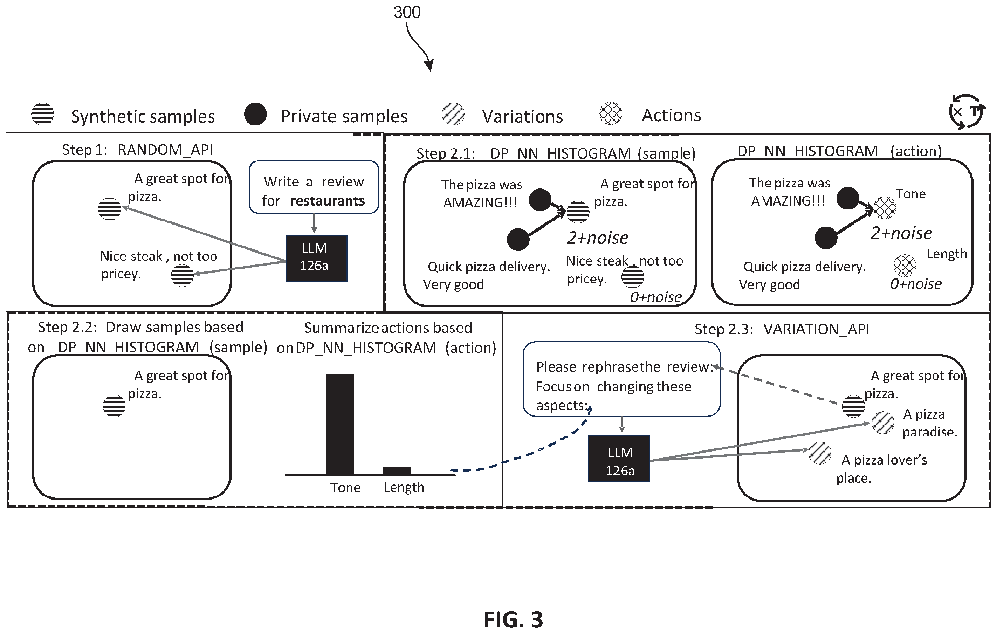

The AI-based privacy-preserving synthetic data generation works with an off-the-shelf LLM 126a to generate DP synthetic data 204 with improved quality based on the seed data 202 and private data 208 (e.g., model training data 208a, LLM instructions 208b, and the like) in a DP synthetic sample and LLM action generation process 210 (details discussion with FIG. 3). The LLM 126a is off-the-shelf and pretrained on general language data (like most publicly available pretrained LLMs). In one implementation, the off-the-shelf LLM 126a is API-based, i.e., hosted by third-party providers and accessed via an API (Application Programming Interface). Examples include OpenAI's GPT models, Google's Bard API, Anthropic's Claude API, and the like. Fine-tuning a generative AI model requires a dataset that is specific to an intended task, thereby helping the downstream AI model to learn the patterns and relationships that are relevant to the task, and to improve its performance. In one implementation, the model fine-tuning involves applying the DP synthetic data 208 to generate DP synthetic sample data for fine-tuning a downstream AI model for content item summarization. The downstream AI model 206 can be a generative AI model (e.g., another generative AI model or a machine learning model). Once the downstream AI model 206 is fine-tuned, the AI model training unit 128 evaluates the downstream AI model 206 based on a reserved test set to measure its performance. Successful models are deployed for inference, with ongoing monitoring in production to maintain reliability.

FIG. 3 is a conceptual diagram 300 of a DP synthetic sample and LLM action generation process implemented in FIG. 2. The process works by first calling RANDOM_API that generates random samples from the LLM 126a in Step 1, and then iteratively perform: (Step 2.1) using private samples to vote for their nearest synthetic samples (under embedding model Φ) to construct a DP_NN_HISTOGRAM (sample), (Step 2.2) drawing samples according to the histogram, and (Step 2.3) passing those samples through VARIATION_API which generates new samples that are similar to the given ones, e.g., similar text items.

The diagram 300 shows an application of the process to generate DP synthetic data from the private model training data 208a for fine-tuning the downstream AI model 206. In this case, two random samples, e.g., reviews of "A great spot for pizza" and "Nice steak, not too pricey" for the "restaurant" class were generated by the LLM 126a via RANDOM_API from the seed data in Step 1. Such class labels (e.g., "restaurant") are non-private, and put in the prompt in FIG. 3. A pseudo-class approach is used to encourage diverse generation of random samples, by generating a list of subcategories for each class using the LLM 126a (e.g., GPT-3.5) and randomly sampling one subcategory as the keyword to put in the prompt for each generation (e.g., Steakhouse, Bistros for restaurants). The prompt can be saved in the enterprise data storage 134 as a part of the request, prompts and responses 148.

During Step 2, the AI-based semantic similarity judging process iteratively goes through steps 2.1-2.3 to refine the synthetic samples towards two private samples "The pizza was AMAZING!!!" and "Quick pizza delivery. Very good." In Step 2.1, each private sample votes for their most semantically similar synthetic sample (using one or more semantic similarity criteria) in the embedding space induced by embedding model Φ. "A great spot for pizza" gets 2 votes, and the other sample gets 0 votes. The process then adds Gaussian noise to the votes to ensure DP. This provides the DP nearest neighbor histogram (DP_NN_HISTOGRAM) for samples.

In addition, each private sample votes for their most favorable LLM actions (such as "tone" or "length") to make the synthetic samples more similar to the private samples. In the case where an individual supplies more than one private sample, the system may opt to choose only one of the individual's samples with which to vote, or choose to divide the individual's vote among some or all of the samples (e.g., by assigning fractional votes so that they sum to one). Thus, no single individual can have a disproportionate impact on voting. By analogy, this approach is applicable to a group of individuals. In FIG. 3, "tone" gets 2 votes, and "length" gets 0 votes. The process then adds Gaussian noise to the votes to ensure DP. This provides the DP nearest neighbor histogram (DP_NN_HISTOGRAM) for actions.

Beside "tone" and "length", the LLM can take actions to vary other dimensions/rubrics such as intent, specificity, persona, tone/style, domain specific words, quality (e.g., well written/spelling errors/more human sounding), cosine similarity of embeddings, and the like to make the synthetic samples more similar to the private samples. The sematic similarity criteria/dimensions/rubrics can be saved in the enterprise data storage 134 as a part of the semantic similarity and histogram data 144. For example, beside the cosine similarity of the embeddings themselves, the LLM 126a can take action to very a length of a synthetic sample or an example in the prompt, to vary specificity of how to summarize a talk to match an actual human or persona, a tone/style (e.g., casual, formal, and the like), or using domain specific words.

For example, some words in a target LLM instruction are not domain-specific. The system thus defines/hard-codes an action to take when there is a low match with domain specific words, such as by varying and/or adding more domain-specific language in a synthetic sample or an example in the prompt. The next iteration that can have a higher score that factors in the domain-specific dimension.

In one implementation, a private sample scores/votes a synthetic sample along these different dimensions. Applying a predetermined set of probabilities for the dimensions, an aggregate score by the private sample for the synthetic sample can be calculated as a sum of the product of vote and the respective probability. The probabilities for the dimensions are predetermined based on heuristic rules and/or by AI (via machine learning and/or GenAI). The aggregate score can then be used to determine the recommended LLM action(s). For example, the system recommends the LLM action with highest aggregate score, the LLM actions with the top three aggregate scores, the LLM actions with an aggregate score meeting a threshold, and the like. Since differentially private techniques are applied in a completely unsupervised manner, the system automatically executed the recommended LLM action(s) to improve the system performance.

In this implementation, a private sample puts all the weights/votes into one favorite synthetic sample and/or one favorite LLM action. In other implementations, a private sample can distribute the vote(s) across different buckets corresponding to different synthetic samples or LLM actions. For example, a private sample can distribute one private vote across multiple examples where each example receives the fractional vote in different buckets/dimensions.

The process uses the histogram to select the new set of points, and then pass them to the variation API. For example, the new set of points are the top-k samples receiving the most votes (after DP noise is added). As another example, the new set of points are selected by importance sampling using the noisy votes as weights. In one implementation, the LLM actions are parameterized, and the system generates hints to the variation API or other paraphraser to generate more similar examples in this dimension/direction.

For example, in Step 2.2, the process draws samples among the two random samples according to the histogram (sample), and only "A great spot for pizza" is selected. In addition, the process summarize the LLM generated actions based on DP_NN_HISTOGRAM (action). In Step 2.3, new similar samples (i.e., variations of the remaining sample(s), e.g., "A pizza paradise" and "A pizza lover's place", were generated by the LLM 126a via VARIATION_API, as the initial DP synthetic samples (of the first iteration), using this prompt of "Please rephrase the review: A great spot for pizza. Focus on changing these aspects: summarized actions based on DP_NN_HISTOGRAM (action)." The prompt listed in FIG. 3 is simplified for illustration. In the next iteration, the initial DP synthetic samples are used to replace the random samples to go through steps 2.1-2.3, to generate DP synthetic samples of the second iteration. DP thus continues to inject noise into the rubric(s)/dimension(s), and execute either highly voted/scored LLM action(s) or randomly sampled LLM actions. The DP synthetic samples of different iterations can be saved in the enterprise data storage 134 as a part of the DP synthetic data 142, the histograms can be saved in the enterprise data storage 134 as a part of the semantic similarity and histogram data 144, and the actions can be saved in the enterprise data storage 134 as a part of the model action data 146.

There are two variation generation methods: paraphrasing and fill-in-the-blanks. For paraphrasing, the process uses the prompt "Please rephrase the below sentences: {input} ". For fill-in-the-blanks, the process masks p% tokens of input as blanks, resulting in masked_input, and use "Please fill in the blanks for the below sentences: {masked_input}" as the prompt. Given the in-context learning ability of LLMs, the process provides few-shot demonstrations to improve the variation generation quality. To add diversity to the generated variations, the process creates tone candidates (e.g., "in a creative way", "in a professional style"), randomly subsample one tone, and add such phrase into the prompt for each generation.

The semantic-similarity-based DP synthetic data generation approach is general across modalities to increase the diversity and quality of sample generation. For example, the length of text can vary, while images have a fixed dimensionality. The approach's core components including Φ (the embedding model), RANDOM_API (for generating random samples from the LLM 126a), and VARIATION_API (for generating new samples similar to the given ones) require domain-specific content items.

In this case, the same LLM 126a is deployed for generating DP synthetic samples, semantic similarity comparison, and LLM action suggestions. In other implementations, different AI models can be deployed to perform one or more of these functions.

The DP synthetic sample and LLM action generation process can be implemented via Algorithm 1 (in Table 1) listed below, thereby providing a larger set of more diverse and higher-quality texts from the LLM 126a with appropriate sequence length and more relevant content. An off-the-shelf text embedding model Φ to calculate the embedding of private/synthetic samples. Notably, the embedding of synthetic samples can be defined either by their self-embedding (when K=0) or the averaged embedding from K variations (when K>0). After calculating embeddings, each private sample votes for its nearest synthetic sample based on their semantic similarity, which results in the Histogram for synthetic samples. As the voting utilizes private samples, the system adds Gaussian noise (0, σ²) to each bin of Histogram to ensure DP.

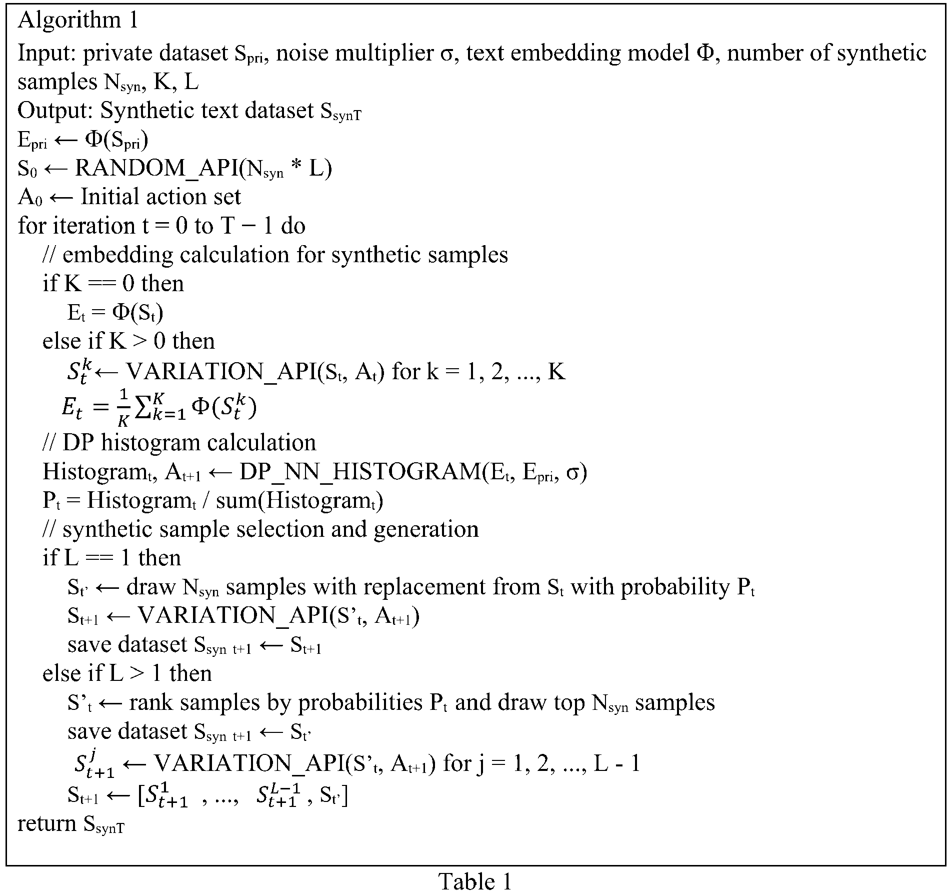

To enhance sample diversity, the DP synthetic sample and LLM action generation process includes (1) ranking synthetic samples according to their probability and selecting only the top N_{syn} samples as the random samples, enhancing the diversity without sample redundancy, (2) generating L₋₁ variations for each selected sample in S_{t'}, creating a larger and more diverse synthetic dataset Sₜ₊₁ for subsequent iterations, and (3) setting the size of the initial dataset to be L times larger than N_{syn}, matching the expanded size of Sₜ₊₁. To select/retain high-quality samples, the DP synthetic sample and LLM action generation process includes: (1) including the selected samples S_{t'} also in the next iteration's dataset Sₜ₊₁, thereby increasing the likelihood of retaining high-quality synthetic candidates, (2) using K=0 so the semantically similar nearest neighbor voting is performed on the self-embedding of synthetic samples, and directly using those selected, good samples as algorithm's output S_{synt+1}← S_{t'}, and (3) processing LLM action At in lines 9, 12, 17, and 22 for histogram updates (that are absent from Aug-PE).

Additionally, the system generates DP synthetic LLM instructions from the LLM instructions 208b (e.g., LLM actions, instructions for the variation API, few-shot demonstrations/samples, and the like), to make them more semantically similar to the LLM instructions 208b. Since the LLM instructions 208b are developer curated, they are not based on the private data, and usually do not introduce new privacy risk.

Referring back to the example of varying and/or adding more domain-specific words in the target LLM instruction, the system uses the private data 208 to decide what jargon to introduce into the target LLM instruction. Instead of having generic LLM instructions to add more jargon, the system uses the private data to generate jargon to add to the target LLM instruction. Taking the auto industry as an example, there are certain words unknown to the developer and/or the LLM 126a. A DP token/term generation algorithm is introduced and its pseudocode is listed in Table 2. Given a set of private data, the system uses in context learning with differential privacy to generate token by token. Instead of telling the LLM generic instructions like adding more jargons, the system actually utilizes those private samples with low jargon scoring to automatically generate the tokens/jargon in an unsupervised way. The DP token generation algorithm has its own DP guarantees to mitigate privacy loss risk. As such, the system guides the action generation with private data like guiding the generation of synthetic data with the private data. However, LLM instructions/actions that guide the DP synthetic sample generation are hard coded, while the DP synthetic LLM instructions/actions are not hard coded but generated on the fly using the private data.

**Table 2**

| | | |
|---|---|---|
| 1. Generate a batch of synthetic examples using LLM (S) | | |
| 2. For each <synthetic example> in S: | | |
| | 1. <instructions> = [] | |
| | 2. For 1 ... K: | |
| | | • Sample a batch of private examples (P) |
| | | • LLM Prompt: "Here are some ground truth examples: [P] <> A synthetic generator produced this example <synthetic example>. |
| | | Produce some instructions to rewrite this example to make it more similar to one or more of the ground truth examples." Partial answer provided: <instructions> |
| | | • Sample tokens with DP noise as output of the above prompt. If the token is <end of sequence>, break; otherwise, append it to <instructions> |
| 3. Finally, run <instructions> on the given synthetic examples in S | | |

The system further manages privacy budget to balance data utility and confidentiality by carefully controlling how much private information is disclosed when using privacy-preserving techniques like differential privacy.

In other implementations, the process depicted in FIG. 3 is applied to generate DP synthetic LLM instructions from the LLM instructions 208b (e.g., LLM actions, instructions for the variation API, few-shot demonstrations/samples, and the like), to promote semantic similarity between synthetic LLM instructions and developer-curated LLM instructions.

When the LLM 126a is asked to share short instructions at each iteration based on its analysis of the difference between the synthetic LLM instructions and the developer-curated LLM instructions, the process depicted in FIG. 3 can be applied to the LLM instructions 208b curated by developers. Taking few-shot demonstrations/samples as an example, they are to be included in the prompt to the LLM 126a for generating LLM actions. Since the few-shot demonstrations/samples are pulled from a private dataset, basic heuristics such as personal identifiable information (PII) removal may still leave linkable information to an individual, the system generates synthetic few-shot samples with DP. The DP synthetic few-shot samples are then included in the prompt to the LLM 126a for generating LLM actions. At a high level, the system utilizes the DP synthetic sample and LLM action generation process 210 in FIG. 3 to generate DP synthetic few-shot samples similar to the ones extracted from the private data, thereby guaranteeing DP on the private few-shot samples. As another example, the LLM 126a is asked to review semantic similarity of both private and synthetic samples and then suggest what LLM action(s) to be taken to make them similar, and the process 210 in FIG. 3 is applied to the LLM action generation process to reduce risk of the LLM 126a leaking private or confidential information.

The system generates DP synthetic text with better performance than Aug-PE, in terms of downstream task utility, by comparing sematic similarity between synthetic and private samples. Additionally, the system is more computationally efficient than Aug-PE by requiring the LLM to generate model actions to make the DP synthetic data even more semantically similar to the private data during each iteration. Moreover, the system applies the semantic-similarity-based differentially private synthetic data generation on LLM instructions to reduce risk of the LLM leaking private or confidential information.

Another benefit of the system is to provide a tighter feedback loop of generating DP synthetic data without actually needing to train or fine-tune any AI model, thus providing the strongest privacy and confidentiality risk mitigations.

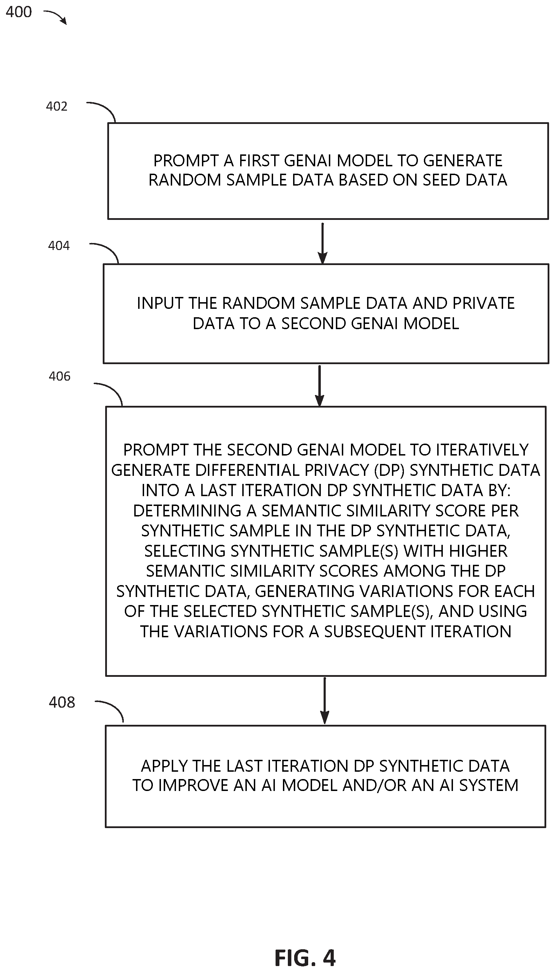

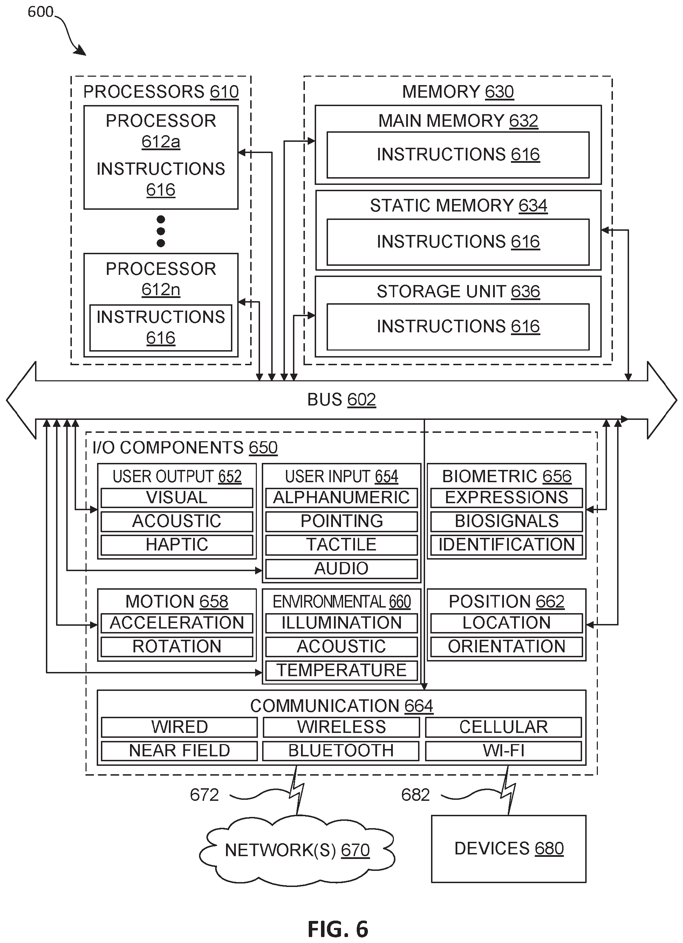

FIG. 4 is a flow chart of an example process 400 for fine-tuning generative AI models for tasks according to the techniques disclosed herein. The process 400 can be implemented by the application services platform 110 or its components shown in the preceding examples. The process 400 may be implemented in, for instance, the example machine including a processor and a memory as shown in FIG. 6. As such, the application services platform 110 can provide means for accomplishing various parts of the process 400, as well as means for accomplishing embodiments of other processes described herein in conjunction with other components of the example computing environment 100. Although the process 400 is illustrated and described as a sequence of steps, it is contemplated that various embodiments of the process 400 may be performed in any order or combination and need not include all the illustrated steps.

In one embodiment, for example, in step 402, the request processing unit 122 works in conjunction with the prompt construction unit 124 to prompt a first generative AI model (e.g., the LLM 126a) to generate random sample data (e.g., "A great spot for pizza" and "Nice steak, not too pricey" in FIG. 3) based on seed data (e.g., the seed data 202).

In step 404, the request processing unit 122 inputs the random sample data and private data (e.g., the private data 208, such as private model training data 208a) to a second generative AI model (e.g., the LLM 126a or another AI model). In one implementation, the second generative AI model is off-the-shelf and API-based. In another implementation, the first generative AI model is used as the second generative AI model.

In step 406, the request processing unit 122 works in conjunction with the prompt construction unit 124 to prompt the second generative AI model to iteratively generate differential privacy (DP) synthetic data (e.g. the DP synthetic data 204) into a last iteration DP synthetic data by: determining a semantic similarity score per synthetic sample in the DP synthetic data, selecting one or more synthetic samples (e.g., "A great spot for pizza") with higher semantic similarity scores (e.g., 2 votes) among the DP synthetic data, generating a plurality of variations (e.g., "A pizza paradise" and "A pizza lover's place" in FIG. 3) for each of the selected one or more synthetic samples, and using the variations for a subsequent iteration. The semantic similarity score is determined based on one or more semantic similarity criteria between the synthetic sample and a private sample in the private data. For example, the one or more semantic similarity criteria include at least one of intent, document type, phrasing, idiomatic expression, length, specificity, persona, tone, style, domain specific term, or written quality.

In one implementation, each of the one or more semantic similarity criteria corresponds to a dimension of a first multidimensional histogram (e.g., the DP_NN_ HISTOGRAM (sample) in FIG. 3). The semantic similarity score per synthetic sample is determined by: voting by each private sample in the private data per dimension a most semantically similar synthetic sample among the DP synthetic data, counting first votes for the synthetic sample across dimensions, adding first noise to the first votes to ensure DP, plotting the multidimensional histogram based on the first votes and the first noise. The one or more synthetic samples are selected by resampling the DP synthetic data based on the first multidimensional histogram to select the one or more synthetic samples.

In step 408, the request processing unit 122 works in conjunction with the prompt construction unit 124 and/or the AI model training unit 128 to apply the last iteration DP synthetic data to improve at least one of an AI model or an AI system. For example, the improvement includes at least one of training an AI model, testing an AI system, evaluating an AI system, detecting an AI system issue, diagnosing an AI system issue, modeling a custom AI system, simulating an AI model, or publishing metrics of feature usage of an AI system.

Additionally, the request processing unit 122 works in conjunction with the prompt construction unit 124 to prompt the second generative AI model to determine one or more actions (e.g., varying "tone" or "length") associated with one of the one or more semantic similarity criteria to make the DP synthetic data more semantically similar to the private data, to implement the one or more actions on the DP synthetic data, and to use the DP synthetic data after the actions for the subsequent iteration. For example, the one or more actions include varying the one semantic similarity criterion (e.g., varying tone, length, intent, specificity, persona, tone/style, domain specific words, quality, cosine similarity of embeddings, and the like) for the synthetic sample to make the synthetic sample more semantically similar to the private sample.

In one implementation, each of the one or more actions corresponds to a dimension of a second multidimensional histogram (e.g., the DP_NN_HISTOGRAM (action) inn FIG. 3), and the one or more actions are determined by: voting by each private sample in the private data per dimension at least one effective action among the one or more actions to make the synthetic sample more semantically similar to the private sample (e.g., varying tone, length, intent, specificity, persona, tone/style, domain specific words, quality, cosine similarity of embeddings, and the like), counting second votes for the synthetic sample across dimensions, adding second noise to the second votes to ensure DP, plotting the second multidimensional histogram based on the second votes and the second noise. The plurality of variations are determined by rephrasing the DP synthetic sample based on the second multidimensional histogram. For instance, the at least one effective action is determined based on the second multidimensional histogram, while the DP synthetic sample is rephrased based on the at least one effective action.

Furthermore, the private data further includes predetermined generative AI model instructions (e.g., the LLM instruction 208b, e.g., LLM actions, instructions for the variation API, few-shot demonstrations/samples, and the like), and the request processing unit 122 inputs the predetermined generative AI model instructions to the second generative AI model. The request processing unit 122 works in conjunction with the prompt construction unit 124 to prompt the second generative AI model to iteratively generating differential privacy (DP) synthetic generative AI model instructions into last iteration DP synthetic generative AI model instructions by: determining a semantic similarity score per synthetic AI model instruction in the DP synthetic generative AI model instructions, selecting one or more synthetic AI model instructions with higher semantic similarity score among the DP synthetic AI model instructions, generating a plurality of variations for each of the selected one or more AI model instructions, and using the variations for a subsequent iteration; and applying the last iteration DP synthetic AI model instructions in the second generative AI model to iteratively generating the DP synthetic data into the last iteration DP synthetic data. The semantic similarity score is determining based on one or more semantic similarity criteria between the synthetic AI model instruction and one of the predetermined AI model instructions.

All the above-discussed seed data 140, DP synthetic data 142, semantic similarity and histogram data 144, model action data 146, and request, prompts and responses 148 can be stored in an enterprise data storage 134. The enterprise data storage 134 can be physical and/or virtual, depending on the entity's needs and IT infrastructure. Examples of physical enterprise data storage systems include network-attached storage (NAS), storage area network (SAN), direct-attached storage (DAS), tape libraries, hybrid storage arrays, object storage, and the like. Examples of virtual enterprise data storage systems include virtual SAN (vSAN), software-defined storage (SDS), cloud storage, hyper-converged Infrastructure (HCI), network virtualization and software-defined networking (SDN), container storage, and the like.

There are security and privacy considerations and strategies for using open source generative AI models with enterprise data, such as data anonymization, isolating data, providing secure access, securing the model, using a secure environment, encryption, regular auditing, compliance with laws and regulations, data retention policies, performing privacy impact assessment, user education, performing regular updates, providing disaster recovery and backup, providing an incident response plan, third-party reviews, and the like. By following these security and privacy best practices, the example computing environment 100 can minimize the risks associated with using open source generative AI models while protecting enterprise data from unauthorized access or exposure.

In an example, the application services platform 110 can store enterprise data separately from generative AI model training data, to reduce the risk of unintentionally leaking sensitive information during model generation. The application services platform 110 can limit access to generative AI models and the enterprise data. The application services platform 110 can also implement proper access controls, strong authentication, and authorization mechanisms to ensure that only authorized personnel can interact with the selected model and the enterprise data.

The application services platform 110 can also run the generative AI model 126 in a secure computing environment. Moreover, the application services platform 110 can employ robust network security, firewalls, and intrusion detection systems to protect against external threats. The application services platform 110 can encrypt the enterprise data and any data in transit. The application services platform 110 can also employ encryption standards for data storage and data transmission to safeguard against data breaches.

Moreover, the application services platform 110 can implement strong security measures around the generative AI model 126 itself, such as regular security audits, code reviews, and ensuring that the model is up-to-date with security patches. The application services platform 110 can periodically audit the generative AI model's usage and access logs, to detect any unauthorized or anomalous activities. The application services platform 110 can also ensure that any use of open source generative AI models complies with relevant data protection regulations such as GDPR, HIPAA, or other industry-specific compliance standards.

The application services platform 110 can establish data retention and data deletion policies to ensure that generated data is not stored longer than necessary, to minimizes the risk of data exposure. The application services platform 110 can perform a privacy impact assessment (PIA) to identify and mitigate potential privacy risks associated with the generative AI model's usage. The application services platform 110 can also provide mechanisms for training and educating users on the proper handling of enterprise data and the responsible use of generative AI models. In addition, the application services platform 110 can stay up-to-date with evolving security threats and best practices that are essential for ongoing data protection.

In some implementations, the system provides a feedback loop by augmenting thumbs up and thumbs down buttons for DP synthetic data in the user interface. If the user dislikes certain DP synthetic sample(s), the system can ask why and use the input to improve the DP synthetic data. A thumbs down click could also prompt the user to indicate whether the DP synthetic data was too long, too short, or too specific.

In some implementations, the application services platform 110 includes a moderation services that analyze user prompt(s), user feedback, responses, and DP synthetic data generated by the generative AI models 126, to ensure that potentially objectionable or offensive content is not generated or utilized by the application services platform 110. If potentially objectionable or offensive content is detected in the user prompt(s), the user feedback, the responses, or the DP synthetic data, the moderation services provides a blocked content notification to the client device 105 indicating that such data is blocked from forming outputs. In some implementations, the request processing unit 122 discards any DP synthetic data that includes potentially objectionable or offensive content and passes any remaining content that has not been discarded to the request processing unit 122 to be provided as outputs. In other implementations, the prompt construction unit 124 discards any content that includes potentially objectionable or offensive content and passes any remaining content that has not been discarded to the generative AI models 126 as an input.

As discussed, the moderation services generate a blocked content notification in response to determining that the user queries, and/or the system prompt includes potentially objectionable or offensive content, and the notification is provided to the native application 114 or the browser application 112 so that the notification can be presented to the user on the client device 105. For instance, the user may attempt to revise and resubmit the user queries. As another example, the system may generate another system prompt after removing task data associated with the potentially objectionable or offensive content. The moderation services can be implemented by a machine learning model trained to analyze the content of these various inputs and/or outputs to perform a semantic analysis on the content to predict whether the content includes potentially objectionable or offensive content (e.g., language/image/sound).

The private database 132 stores private data and can be implemented on the application services platform 110 in some implementations. In other implementations, at least a portion of the private database 132 are implemented on an external server that is accessible by the AI model training unit 128.

As mentioned, the application services platform 110 complies with privacy guidelines and regulations that apply to the usage of user data included in the private database 132 to ensure that users have control over how the application services platform 110 utilizes their data. The user is provided with an opportunity to opt into the application services platform 110 to allow the application services platform 110 to access the user data. In some implementations, the first time that an application, such as the native application 114 or the browser application 112 presents the data analysis assistant to the user, the user is presented with a message that indicates that the user may opt into allowing the application services platform 110 to access user data included in the private database 132 to support the AI model fine-tuning functionality. The user may opt into allowing the application services platform 110 to access all or a subset of user data included in the private database 132. Furthermore, the user may modify their opt-in status at any time by accessing their user data and selectively opting into or opting out of allowing the application services platform 110 from accessing and utilizing user data from the private database 132 as a whole or individually.

For example, the system provides DP synthetic data to fine-tune generative AI models for different tasks with more accurate and relevant results for targeted tasks as well as reduced cost. The AI-based privacy-preserving synthetic data generation offers more user control via the sematic similarity criteria thus providing transparency and interpretability..

For example, the AI-based privacy-preserving synthetic data so generated can be applied to fine-tune any generative AI models tailed for different tasks in various applications (e.g., email applications, calendar applications, task management applications, software development applications, and the like) to, for example, generate a content item summary, via a chat interface. Such interactive, chat-based AI assistance can help a user to generate the content item summary comprehensively, quickly and accurately.

In addition, the system provides users with interactive tools to refine the content item summary, and infer actions to complete tasks in the content item summary. For example, the system uses generative AI to create a content item summary for a software delivery project. Each task event is assigned with a discrete timeslot, inferred resources, resource consuming entities, and the like that provide context and relevant information to perform the task event. A user can use the AI-assisted application at the start of a day and view a content item summary with task events and suggested actions to complete each task event.

Beside fine-tuning an AI model, the AI-based privacy-preserving synthetic data can be used to test an AI system, evaluate an AI system, detect an AI system issue, diagnose an AI system issue, model a custom AI system, simulate an AI model, publish metrics of feature usage of an AI system, simulate end-user content, behavior, or interaction with a computing system, and the like.

The detailed examples of systems, devices, and techniques described in connection with FIGS. 1-4 are presented herein for illustration of the disclosure and its benefits. Such examples of use should not be construed to be limitations on the logical process embodiments of the disclosure, nor should variations of user interface methods from those described herein be considered outside the scope of the present disclosure. It is understood that references to displaying or presenting an item (such as, but not limited to, presenting an image on a display device, presenting audio via one or more loudspeakers, and/or vibrating a device) include issuing instructions, commands, and/or signals causing, or reasonably expected to cause, a device or system to display or present the item. In some embodiments, various features described in FIGS. 1-4 are implemented in respective modules, which may also be referred to as, and/or include, logic, components, units, and/or mechanisms. Modules may constitute either software modules (for example, code embodied on a machine-readable medium) or hardware modules.

In some examples, a hardware module may be implemented mechanically, electronically, or with any suitable combination thereof. For example, a hardware module may include dedicated circuitry or logic that is configured to perform certain operations. For example, a hardware module may include a special-purpose processor, such as a field-programmable gate array (FPGA) or an Application Specific Integrated Circuit (ASIC). A hardware module may also include programmable logic or circuitry that is temporarily configured by software to perform certain operations and may include a portion of machine-readable medium data and/or instructions for such configuration. For example, a hardware module may include software encompassed within a programmable processor configured to execute a set of software instructions. It will be appreciated that the decision to implement a hardware module mechanically, in dedicated and permanently configured circuitry, or in temporarily configured circuitry (for example, configured by software) may be driven by cost, time, support, and engineering considerations.

Accordingly, the phrase "hardware module" should be understood to encompass a tangible entity capable of performing certain operations and may be configured or arranged in a certain physical manner, be that an entity that is physically constructed, permanently configured (for example, hardwired), and/or temporarily configured (for example, programmed) to operate in a certain manner or to perform certain operations described herein. As used herein, "hardware-implemented module" refers to a hardware module. Considering examples in which hardware modules are temporarily configured (for example, programmed), each of the hardware modules need not be configured or instantiated at any one instance in time. For example, where a hardware module includes a programmable processor configured by software to become a special-purpose processor, the programmable processor may be configured as respectively different special-purpose processors (for example, including different hardware modules) at different times. Software may accordingly configure a processor or processors, for example, to constitute a particular hardware module at one instance of time and to constitute a different hardware module at a different instance of time. A hardware module implemented using one or more processors may be referred to as being "processor implemented" or "computer implemented."

Hardware modules can provide information to, and receive information from, other hardware modules. Accordingly, the described hardware modules may be regarded as being communicatively coupled. Where multiple hardware modules exist contemporaneously, communications may be achieved through signal transmission (for example, over appropriate circuits and buses) between or among two or more of the hardware modules. In embodiments in which multiple hardware modules are configured or instantiated at different times, communications between such hardware modules may be achieved, for example, through the storage and retrieval of information in memory devices to which the multiple hardware modules have access. For example, one hardware module may perform an operation and store the output in a memory device, and another hardware module may then access the memory device to retrieve and process the stored output.

In some examples, at least some of the operations of a method may be performed by one or more processors or processor-implemented modules. Moreover, the one or more processors may also operate to support performance of the relevant operations in a "cloud computing" environment or as a "software as a service" (SaaS). For example, at least some of the operations may be performed by, and/or among, multiple computers (as examples of machines including processors), with these operations being accessible via a network (for example, the Internet) and/or via one or more software interfaces (for example, an application program interface (API)). The performance of certain of the operations may be distributed among the processors, not only residing within a single machine, but deployed across several machines. Processors or processor-implemented modules may be in a single geographic location (for example, within a home or office environment, or a server farm), or may be distributed across multiple geographic locations.

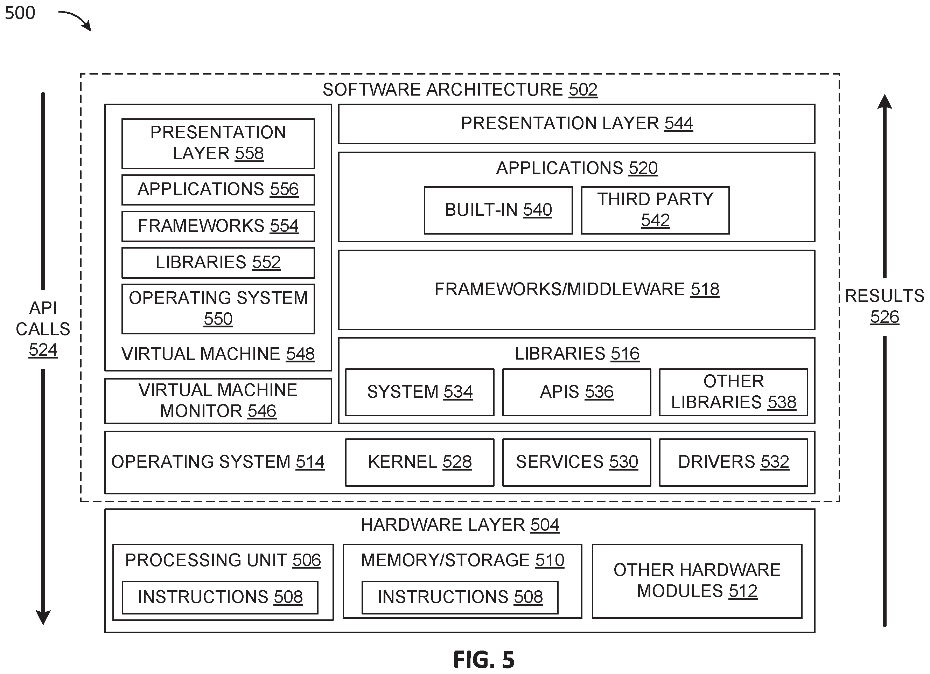

FIG. 5 is a block diagram 500 illustrating an example software architecture 502, various portions of which may be used in conjunction with various hardware architectures herein described, which may implement any of the above-described features. FIG. 5 is a nonlimiting example of a software architecture, and it will be appreciated that many other architectures may be implemented to facilitate the functionality described herein. The software architecture 502 may execute on hardware such as a machine 600 of FIG. 6 that includes, among other things, processors 610, memory 630, and input/output (I/O) components 650. A representative hardware layer 504 is illustrated and can represent, for example, the machine 600 of FIG. 6. The representative hardware layer 504 includes a processing unit 506 and associated executable instructions 508. The executable instructions 508 represent executable instructions of the software architecture 502, including implementation of the methods, modules and so forth described herein. The hardware layer 504 also includes a memory/storage 510, which also includes the executable instructions 508 and accompanying data. The hardware layer 504 may also include other hardware modules 512. The executable instructions 508 held by processing unit 506 may be portions of the executable instructions 508 held by the memory/storage 510.

The example software architecture 502 may be conceptualized as layers, each providing various functionality. For example, the software architecture 502 may include layers and components such as an operating system (OS) 514, libraries 516, frameworks/middleware 518, applications 520, and a presentation layer 544. Operationally, the applications 520 and/or other components within the layers may invoke API calls 524 to other layers and receive corresponding results 526. The layers illustrated are representative in nature and other software architectures may include additional or different layers. For example, some mobile or special purpose operating systems may not provide the frameworks/middleware 518.

The OS 514 may manage hardware resources and provide common services. The OS 514 may include, for example, a kernel 528, services 530, and drivers 532. The kernel 528 may act as an abstraction layer between the hardware layer 504 and other software layers. For example, the kernel 528 may be responsible for memory management, processor management (for example, scheduling), component management, networking, security settings, and so on. The services 530 may provide other common services for the other software layers. The drivers 532 may be responsible for controlling or interfacing with the underlying hardware layer 504. For instance, the drivers 532 may include display drivers, camera drivers, memory/storage drivers, peripheral device drivers (for example, via Universal Serial Bus (USB)), network and/or wireless communication drivers, audio drivers, and so forth depending on the hardware and/or software configuration.

The libraries 516 may provide a common infrastructure that may be used by the applications 520 and/or other components and/or layers. The libraries 516 typically provide functionality for use by other software modules to perform tasks, rather than interacting directly with the OS 514. The libraries 516 may include system libraries 534 (for example, C standard library) that may provide functions such as memory allocation, string manipulation, and file operations. In addition, the libraries 516 may include API libraries 536 such as media libraries (for example, supporting presentation and manipulation of image, sound, and/or video data formats), graphics libraries (for example, an OpenGL library for rendering 2D and 3D graphics on a display), database libraries (for example, SQLite or other relational database functions), and web libraries (for example, WebKit that may provide web browsing functionality). The libraries 516 may also include a wide variety of other libraries 538 to provide many functions for applications 520 and other software modules.

The frameworks/middleware 518 (also sometimes referred to as middleware) provide a higher-level common infrastructure that may be used by the applications 520 and/or other software modules. For example, the frameworks/middleware 518 may provide various graphic user interface (GUI) functions, high-level resource management, or high-level location services. The frameworks/middleware 518 may provide a broad spectrum of other APIs for applications 520 and/or other software modules.

The applications 520 include built-in applications 540 and/or third-party applications 542. Examples of built-in applications 540 may include, but are not limited to, a contacts application, a browser application, a location application, a media application, a messaging application, and/or a game application. Third-party applications 542 may include any applications developed by an entity other than the vendor of the particular platform. The applications 520 may use functions available via OS 514, libraries 516, frameworks/middleware 518, and presentation layer 544 to create user interfaces to interact with users.

Some software architectures use virtual machines, as illustrated by a virtual machine 548. The virtual machine 548 provides an execution environment where applications/modules can execute as if they were executing on a hardware machine (such as the machine 600 of FIG. 6, for example). The virtual machine 548 may be hosted by a host OS (for example, OS 514) or hypervisor, and may have a virtual machine monitor 546 which manages operation of the virtual machine 548 and interoperation with the host operating system. A software architecture, which may be different from software architecture 502 outside of the virtual machine, executes within the virtual machine 548 such as an OS 550, libraries 552, frameworks 554, applications 556, and/or a presentation layer 558.

FIG. 6 is a block diagram illustrating components of an example machine 600 configured to read instructions from a machine-readable medium (for example, a machine-readable storage medium) and perform any of the features described herein. The example machine 600 is in a form of a computer system, within which instructions 616 (for example, in the form of software components) for causing the machine 600 to perform any of the features described herein may be executed. As such, the instructions 616 may be used to implement modules or components described herein. The instructions 616 cause unprogrammed and/or unconfigured machine 600 to operate as a particular machine configured to carry out the described features. The machine 600 may be configured to operate as a standalone device or may be coupled (for example, networked) to other machines. In a networked deployment, the machine 600 may operate in the capacity of a server machine or a client machine in a server-client network environment, or as a node in a peer-to-peer or distributed network environment. Machine 600 may be embodied as, for example, a server computer, a client computer, a personal computer (PC), a tablet computer, a laptop computer, a netbook, a set-top box (STB), a gaming and/or entertainment system, a smart phone, a mobile device, a wearable device (for example, a smart watch), and an Internet of Things (IoT) device. Further, although only a single machine 600 is illustrated, the term "machine" includes a collection of machines that individually or jointly execute the instructions 616.

The machine 600 may include processors 610, memory 630, and I/O components 650, which may be communicatively coupled via, for example, a bus 602. The bus 602 may include multiple buses coupling various elements of machine 600 via various bus technologies and protocols. In an example, the processors 610 (including, for example, a central processing unit (CPU), a graphics processing unit (GPU), a neural processing unit (NPU), a tensor processing unit (TPU), a digital signal processor (DSP), an ASIC, or a suitable combination thereof) may include one or more processors 612a to 612n that may execute the instructions 616 and process data. In some examples, one or more processors 610 may execute instructions provided or identified by one or more other processors 610. The term "processor" includes a multi-core processor including cores that may execute instructions contemporaneously. Although FIG. 6 shows multiple processors, the machine 600 may include a single processor with a single core, a single processor with multiple cores (for example, a multi-core processor), multiple processors each with a single core, multiple processors each with multiple cores, or any combination thereof. In some examples, the machine 600 may include multiple processors distributed among multiple machines.

The memory 630 may include a main memory 632, a static memory 634, or other memory, and a storage unit 636, both accessible to the processors 610 such as via the bus 602. The storage unit 636 and memory 632, 634 store instructions 616 embodying any one or more of the functions described herein. The memory 630 may also store temporary, intermediate, and/or long-term data for processors 610. The instructions 616 may also reside, completely or partially, within the memory 632, 634, within the storage unit 636, within at least one of the processors 610 (for example, within a command buffer or cache memory), within memory at least one of I/O components 650, or any suitable combination thereof, during execution thereof. Accordingly, the memory 632, 634, the storage unit 636, memory in processors 610, and memory in I/O components 650 are examples of machine-readable media.

As used herein, "machine-readable medium" refers to a device able to temporarily or permanently store instructions and data that cause machine 600 to operate in a specific fashion, and may include, but is not limited to, random-access memory (RAM), read-only memory (ROM), buffer memory, flash memory, optical storage media, magnetic storage media and devices, cache memory, network-accessible or cloud storage, other types of storage and/or any suitable combination thereof. The term "machine-readable medium" applies to a single medium, or combination of multiple media, used to store instructions (for example, instructions 616) for execution by a machine 600 such that the instructions, when executed by one or more processors 610 of the machine 600, cause the machine 600 to perform and one or more of the features described herein. Accordingly, a "machine-readable medium" may refer to a single storage device, as well as "cloud-based" storage systems or storage networks that include multiple storage apparatus or devices. The term "machine-readable medium" excludes signals per se.

The I/O components 650 may include a wide variety of hardware components adapted to receive input, provide output, produce output, transmit information, exchange information, capture measurements, and so on. The specific I/O components 650 included in a particular machine will depend on the type and/or function of the machine. For example, mobile devices such as mobile phones may include a touch input device, whereas a headless server or IoT device may not include such a touch input device. The particular examples of I/O components illustrated in FIG. 6 are in no way limiting, and other types of components may be included in machine 600. The grouping of I/O components 650 are merely for simplifying this discussion, and the grouping is in no way limiting. In various examples, the I/O components 650 may include user output components 652 and user input components 654. User output components 652 may include, for example, display components for displaying information (for example, a liquid crystal display (LCD) or a projector), acoustic components (for example, speakers), haptic components (for example, a vibratory motor or force-feedback device), and/or other signal generators. User input components 654 may include, for example, alphanumeric input components (for example, a keyboard or a touch screen), pointing components (for example, a mouse device, a touchpad, or another pointing instrument), and/or tactile input components (for example, a physical button or a touch screen that provides location and/or force of touches or touch gestures) configured for receiving various user inputs, such as user commands and/or selections.

In some examples, the I/O components 650 may include biometric components 656, motion components 658, environmental components 660, and/or position components 662, among a wide array of other physical sensor components. The biometric components 656 may include, for example, components to detect body expressions (for example, facial expressions, vocal expressions, hand or body gestures, or eye tracking), measure biosignals (for example, heart rate or brain waves), and identify a person (for example, via voice-, retina-, fingerprint-, and/or facial-based identification). The motion components 658 may include, for example, acceleration sensors (for example, an accelerometer) and rotation sensors (for example, a gyroscope). The environmental components 660 may include, for example, illumination sensors, temperature sensors, humidity sensors, pressure sensors (for example, a barometer), acoustic sensors (for example, a microphone used to detect ambient noise), proximity sensors (for example, infrared sensing of nearby objects), and/or other components that may provide indications, measurements, or signals corresponding to a surrounding physical environment. The position components 662 may include, for example, location sensors (for example, a Global Position System (GPS) receiver), altitude sensors (for example, an air pressure sensor from which altitude may be derived), and/or orientation sensors (for example, magnetometers).

The I/O components 650 may include communication components 664, implementing a wide variety of technologies operable to couple the machine 600 to network(s) 670 and/or device(s) 680 via respective communicative couplings 672 and 682. The communication components 664 may include one or more network interface components or other suitable devices to interface with the network(s) 670. The communication components 664 may include, for example, components adapted to provide wired communication, wireless communication, cellular communication, Near Field Communication (NFC), Bluetooth communication, Wi-Fi, and/or communication via other modalities. The device(s) 680 may include other machines or various peripheral devices (for example, coupled via USB).

In some examples, the communication components 664 may detect identifiers or include components adapted to detect identifiers. For example, the communication components 664 may include Radio Frequency Identification (RFID) tag readers, NFC detectors, optical sensors (for example, one- or multi-dimensional bar codes, or other optical codes), and/or acoustic detectors (for example, microphones to identify tagged audio signals). In some examples, location information may be determined based on information from the communication components 664, such as, but not limited to, geo-location via Internet Protocol (IP) address, location via Wi-Fi, cellular, NFC, Bluetooth, or other wireless station identification and/or signal triangulation.

In the preceding detailed description, numerous specific details are set forth by way of examples in order to provide a thorough understanding of the relevant teachings. However, it should be apparent that the present teachings may be practiced without such details. In other instances, well known methods, procedures, components, and/or circuitry have been described at a relatively high-level, without detail, in order to avoid unnecessarily obscuring aspects of the present teachings.

While various implementations have been described, the description is intended to be exemplary, rather than limiting, and it is understood that many more implementations and implementations are possible that are within the scope of the implementations. Although many possible combinations of features are shown in the accompanying figures and discussed in this detailed description, many other combinations of the disclosed features are possible. Any feature of any implementation may be used in combination with or substituted for any other feature or element in any other implementation unless specifically restricted. Therefore, it will be understood that any of the features shown and/or discussed in the present disclosure may be implemented together in any suitable combination. Accordingly, the implementations are not to be restricted except in light of the attached claims and their equivalents. Also, various modifications and changes may be made within the scope of the attached claims.

While the foregoing has described what are considered to be the best mode and/or other examples, it is understood that various modifications may be made therein and that the subject matter disclosed herein may be implemented in various forms and examples, and that the teachings may be applied in numerous applications, only some of which have been described herein. It is intended by the following claims to claim any and all applications, modifications and variations that fall within the true scope of the present teachings.

Unless otherwise stated, all measurements, values, ratings, positions, magnitudes, sizes, and other specifications that are set forth in this specification, including in the claims that follow, are approximate, not exact. They are intended to have a reasonable range that is consistent with the functions to which they relate and with what is customary in the art to which they pertain.

The scope of protection is limited solely by the claims that now follow. That scope is intended and should be interpreted to be as broad as is consistent with the ordinary meaning of the language that is used in the claims when interpreted in light of this specification and the prosecution history that follows and to encompass all structural and functional equivalents. Notwithstanding, none of the claims are intended to embrace subject matter that fails to satisfy the requirement of Sections 101, 102, or 103 of the Patent Act, nor should they be interpreted in such a way. Any unintended embracement of such subject matter is hereby disclaimed.

Except as stated immediately above, nothing that has been stated or illustrated is intended or should be interpreted to cause a dedication of any component, step, feature, object, benefit, advantage, or equivalent to the public, regardless of whether it is or is not recited in the claims.

It will be understood that the terms and expressions used herein have the ordinary meaning as is accorded to such terms and expressions with respect to their corresponding respective areas of inquiry and study except where specific meanings have otherwise been set forth herein. Relational terms such as first and second and the like may be used solely to distinguish one entity or action from another without necessarily requiring or implying any actual such relationship or order between such entities or actions. The terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus. An element proceeded by "a" or "an" does not, without further constraints, preclude the existence of additional identical elements in the process, method, article, or apparatus that comprises the element. Furthermore, subsequent limitations referring back to "said element" or "the element" performing certain functions signifies that "said element" or "the element" alone or in combination with additional identical elements in the process, method, article, or apparatus are capable of performing all of the recited functions.

The Abstract of the Disclosure is provided to allow the reader to quickly ascertain the nature of the technical disclosure. It is submitted with the understanding that it will not be used to interpret or limit the scope or meaning of the claims. In addition, in the foregoing Detailed Description, it can be seen that various features are grouped together in various examples for the purpose of streamlining the disclosure. This method of disclosure is not to be interpreted as reflecting an intention that the claims require more features than are expressly recited in each claim. Rather, as the following claims reflect, inventive subject matter lies in less than all features of a single disclosed example. Thus, the following claims are hereby incorporated into the Detailed Description, with each claim standing on its own as a separately claimed subject matter.

The disclosure presented herein also encompasses the subject matter set forth in the following clauses.
Example Clause 1. A data processing system comprising: a processor; and a machine-readable storage medium storing executable instructions that, when executed, cause the processor alone or in combination with other processors to perform operations of: prompting a first generative artificial intelligence (AI) model to generate random sample data based on seed data; inputting the random sample data and private data to a second generative AI model; prompting the second generative AI model to iteratively generate differential privacy (DP) synthetic data into a last iteration DP synthetic data by: determining a semantic similarity score per synthetic sample in the DP synthetic data, selecting one or more synthetic samples with higher semantic similarity scores among the DP synthetic data, generating a plurality of variations for each of the selected one or more synthetic samples, and using the variations for a subsequent iteration, wherein the semantic similarity score is determined based on one or more semantic similarity criteria between the synthetic sample and a private sample in the private data; and applying the last iteration DP synthetic data to improve at least one of an AI model or an AI system.
Example Clause 2. The data processing system of example clause 1, wherein each of the one or more semantic similarity criteria corresponds to a dimension of a first multidimensional histogram, wherein determining the semantic similarity score per synthetic sample includes voting by each private sample in the private data per dimension a most semantically similar synthetic sample among the DP synthetic data, counting first votes for the synthetic sample across dimensions, adding first noise to the first votes to ensure DP, plotting the multidimensional histogram based on the first votes and the first noise, and wherein selecting the one or more synthetic samples includes resampling the DP synthetic data based on the first multidimensional histogram to select the one or more synthetic samples.
Example Clause 3. The data processing system of example clause 1 or 2, wherein the machine-readable storage medium further includes instructions configured to cause the processor alone or in combination with other processors to perform: prompting the second generative AI model to determine one or more actions associated with one of the one or more semantic similarity criteria to make the DP synthetic data more semantically similar to the private data, to implement the one or more actions on the DP synthetic data, and to use the DP synthetic data after the actions for the subsequent iteration.
Example Clause 4. The data processing system of any one of example clauses 1 to 3, wherein the one or more actions include varying the one of the one or more semantic similarity criteria for the synthetic sample to make the synthetic sample more semantically similar to the private sample.
Example Clause 5. The data processing system of any one of example clause 1 to 4, wherein each of the one or more actions corresponds to a dimension of a second multidimensional histogram, wherein determining the one or more actions includes voting by each private sample in the private data per dimension at least one effective action among the one or more actions to make the synthetic sample more semantically similar to the private sample, counting second votes for the synthetic sample across dimensions, adding second noise to the second votes to ensure DP, plotting the second multidimensional histogram based on the second votes and the second noise, and wherein generating the plurality of variations includes rephrasing the DP synthetic sample based on the second multidimensional histogram.
Example Clause 6. The data processing system of any one of example clauses 1 to 5, wherein the machine-readable storage medium further includes instructions configured to cause the processor alone or in combination with other processors to perform: determining the at least one effective action based on the second multidimensional histogram, wherein rephrasing the DP synthetic sample is based on the at least one effective action.
Example Clause 7. The data processing system of any one of example clauses 1 to 6, wherein the private data further includes predetermined generative AI model instructions, and the machine-readable storage medium further includes instructions configured to cause the processor alone or in combination with other processors to perform: inputting the predetermined generative AI model instructions to the second generative AI model; prompting the second generative AI model to iteratively generating differential privacy (DP) synthetic generative AI model instructions into last iteration DP synthetic generative AI model instructions by: determining a semantic similarity score per synthetic AI model instruction in the DP synthetic generative AI model instructions, selecting one or more synthetic AI model instructions with higher semantic similarity score among the DP synthetic AI model instructions, generating a plurality of variations for each of the selected one or more AI model instructions, and using the variations for a subsequent iteration, wherein the semantic similarity score is determining based on one or more semantic similarity criteria between the synthetic AI model instruction and one of the predetermined AI model instructions; and applying the last iteration DP synthetic AI model instructions in the second generative AI model to iteratively generating the DP synthetic data into the last iteration DP synthetic data.
Example Clause 8. The data processing system of any one of example clauses 1 to 7, wherein the one or more semantic similarity criteria include at least one of intent, document type, phrasing, idiomatic expression, length, specificity, persona, tone, style, domain specific term, or written quality.
Example Clause 9. The data processing system of any one of example clauses 1 to 8, wherein the second generative AI model is off-the-shelf and API-based.
Example Clause 10. The data processing system of any one of example clauses 1 to 9, wherein the first generative AI model is used as the second generative AI model.
Example Clause 11. A method comprising: prompting a first generative artificial intelligence (AI) model to generate random sample data based on seed data; inputting the random sample data and private data to a second generative AI model; prompting the second generative AI model to iteratively generate differential privacy (DP) synthetic data into a last iteration DP synthetic data by: determining a semantic similarity score per synthetic sample in the DP synthetic data, selecting one or more synthetic samples with higher semantic similarity scores among the DP synthetic data, generating a plurality of variations for each of the selected one or more synthetic samples, and using the variations for a subsequent iteration, wherein the semantic similarity score is determined based on one or more semantic similarity criteria between the synthetic sample and a private sample in the private data; and applying the last iteration DP synthetic data to improve at least one of an AI model or an AI system.
Example Clause 12. The method of example clause 11, wherein each of the one or more semantic similarity criteria corresponds to a dimension of a first multidimensional histogram, wherein determining the semantic similarity score per synthetic sample includes voting by each private sample in the private data per dimension a most semantically similar synthetic sample among the DP synthetic data, counting first votes for the synthetic sample across dimensions, adding first noise to the first votes to ensure DP, plotting the multidimensional histogram based on the first votes and the first noise, and wherein selecting the one or more synthetic samples includes resampling the DP synthetic data based on the first multidimensional histogram to select the one or more synthetic samples.
Example Clause 13. The method of example clause 11 or 12, further comprising: prompting the second generative AI model to determine one or more actions associated with one of the one or more semantic similarity criteria to make the DP synthetic data more semantically similar to the private data, to implement the one or more actions on the DP synthetic data, and to use the DP synthetic data after the actions for the subsequent iteration.
Example Clause 14. The method of any one of example clauses 11 to 13, wherein the one or more actions include varying the one of the one or more semantic similarity criteria for the synthetic sample to make the synthetic sample more semantically similar to the private sample.
Example Clause 15. The method of any one of example clauses 11 to 14, wherein each of the one or more actions corresponds to a dimension of a second multidimensional histogram, wherein determining the one or more actions includes voting by each private sample in the private data per dimension at least one effective action among the one or more actions to make the synthetic sample more semantically similar to the private sample, counting second votes for the synthetic sample across dimensions, adding second noise to the second votes to ensure DP, plotting the second multidimensional histogram based on the second votes and the second noise, and wherein generating the plurality of variations includes rephrasing the DP synthetic sample based on the second multidimensional histogram.
Example Clause 16. A non-transitory computer readable medium on which are stored instructions that, when executed, cause a programmable device to perform functions of: prompting a first generative artificial intelligence (AI) model to generate random sample data based on seed data; inputting the random sample data and private data to a second generative AI model; prompting the second generative AI model to iteratively generate differential privacy (DP) synthetic data into a last iteration DP synthetic data by: determining a semantic similarity score per synthetic sample in the DP synthetic data, selecting one or more synthetic samples with higher semantic similarity scores among the DP synthetic data, generating a plurality of variations for each of the selected one or more synthetic samples, and using the variations for a subsequent iteration, wherein the semantic similarity score is determined based on one or more semantic similarity criteria between the synthetic sample and a private sample in the private data; and applying the last iteration DP synthetic data to improve at least one of an AI model or an AI system.
Example Clause 17. The non-transitory computer readable medium of example clause 16, wherein each of the one or more semantic similarity criteria corresponds to a dimension of a first multidimensional histogram, wherein determining the semantic similarity score per synthetic sample includes voting by each private sample in the private data per dimension a most semantically similar synthetic sample among the DP synthetic data, counting first votes for the synthetic sample across dimensions, adding first noise to the first votes to ensure DP, plotting the multidimensional histogram based on the first votes and the first noise, and wherein selecting the one or more synthetic samples includes resampling the DP synthetic data based on the first multidimensional histogram to select the one or more synthetic samples.
Example Clause 18. The non-transitory computer readable medium of example clause 16 or 17, wherein the instructions when executed, further cause the programmable device to perform: prompting the second generative AI model to determine one or more actions associated with one of the one or more semantic similarity criteria to make the DP synthetic data more semantically similar to the private data, to implement the one or more actions on the DP synthetic data, and to use the DP synthetic data after the actions for the subsequent iteration.
Example Clause 19. The non-transitory computer readable medium of any one of example clauses 16 to 18, wherein the one or more actions include varying the one of the one or more semantic similarity criteria for the synthetic sample to make the synthetic sample more semantically similar to the private sample.
Example Clause 20. The non-transitory computer readable medium of any one of example clauses 16 to 19, wherein each of the one or more actions corresponds to a dimension of a second multidimensional histogram, wherein determining the one or more actions includes voting by each private sample in the private data per dimension at least one effective action among the one or more actions to make the synthetic sample more semantically similar to the private sample, counting second votes for the synthetic sample across dimensions, adding second noise to the second votes to ensure DP, plotting the second multidimensional histogram based on the second votes and the second noise, and wherein generating the plurality of variations includes rephrasing the DP synthetic sample based on the second multidimensional histogram.
Example Clause 21. A data processing system implements prompting a first generative AI model to generate random sample data based on seed data; inputting the random sample data and private data to a second generative AI model; prompting the second generative AI model to iteratively generate differential privacy (DP) synthetic data into a last iteration DP synthetic data by: determining a semantic similarity score per synthetic sample in the DP synthetic data, selecting synthetic sample(s) with higher semantic similarity scores among the DP synthetic data, generating a plurality of variations for each of the selected synthetic sample(s), and using the variations for a subsequent iteration, the semantic similarity score being determined based on one or more semantic similarity criteria between the synthetic sample and a private sample in the private data; and applying the last iteration DP synthetic data to improve at least one of an AI model or an AI system.

## Claims

1. A data processing system (600) comprising:
a processor (610); and
a machine-readable storage medium (630) in communication with the processor, the memory comprising executable instructions (616) that, when executed by the processor, cause the data processing system to perform operations of:
prompting a first generative artificial intelligence 'AI' model (126a) to generate random sample data based on seed data (202);
inputting the random sample data and private data (208/208a) to a second generative AI model (126a);
prompting the second generative AI model to iteratively generate differential privacy 'DP' synthetic data (204) into a last iteration DP synthetic data by: determining a semantic similarity score per synthetic sample in the DP synthetic data, selecting one or more synthetic samples with higher semantic similarity scores among the DP synthetic data, generating a plurality of variations for each of the selected one or more synthetic samples, and using the variations for a subsequent iteration, wherein the semantic similarity score is determined based on one or more semantic similarity criteria between the synthetic sample and a private sample in the private data; and
applying the last iteration DP synthetic data to improve at least one of an AI model (206) or an AI system.

2. The data processing system of claim 1, wherein each of the one or more semantic similarity criteria corresponds to a dimension of a first multidimensional histogram,
wherein determining the semantic similarity score per synthetic sample includes voting by each private sample in the private data per dimension a most semantically similar synthetic sample among the DP synthetic data, counting first votes for the synthetic sample across dimensions, adding first noise to the first votes to ensure DP, plotting the multidimensional histogram based on the first votes and the first noise, and
wherein selecting the one or more synthetic samples includes resampling the DP synthetic data based on the first multidimensional histogram to select the one or more synthetic samples.

3. The data processing system of any of claim 1 or claim 2, wherein the machine-readable storage medium further includes instructions configured to cause the processor alone or in combination with other processors to perform:
prompting the second generative AI model to determine one or more actions associated with one of the one or more semantic similarity criteria to make the DP synthetic data more semantically similar to the private data, to implement the one or more actions on the DP synthetic data, and to use the DP synthetic data after the actions for the subsequent iteration.

4. The data processing system of any of claims 1-3, wherein the one or more actions include varying the one of the one or more semantic similarity criteria for the synthetic sample to make the synthetic sample more semantically similar to the private sample.

5. The data processing system of any of claims 1-4, wherein each of the one or more actions corresponds to a dimension of a second multidimensional histogram,
wherein determining the one or more actions includes voting by each private sample in the private data per dimension at least one effective action among the one or more actions to make the synthetic sample more semantically similar to the private sample, counting second votes for the synthetic sample across dimensions, adding second noise to the second votes to ensure DP, plotting the second multidimensional histogram based on the second votes and the second noise, and
wherein generating the plurality of variations includes rephrasing the DP synthetic sample based on the second multidimensional histogram.

6. The data processing system of any of claims 1-5, wherein the machine-readable storage medium further includes instructions configured to cause the processor alone or in combination with other processors to perform:
determining the at least one effective action based on the second multidimensional histogram,
wherein rephrasing the DP synthetic sample is based on the at least one effective action.

7. The data processing system of any of claims 1-6, wherein the private data further includes predetermined generative AI model instructions, and the machine-readable storage medium further includes instructions configured to cause the processor alone or in combination with other processors to perform:
inputting the predetermined generative AI model instructions to the second generative AI model;
prompting the second generative AI model to iteratively generating differential privacy 'DP' synthetic generative AI model instructions into last iteration DP synthetic generative AI model instructions by: determining a semantic similarity score per synthetic AI model instruction in the DP synthetic generative AI model instructions, selecting one or more synthetic AI model instructions with higher semantic similarity score among the DP synthetic AI model instructions, generating a plurality of variations for each of the selected one or more AI model instructions, and using the variations for a subsequent iteration, wherein the semantic similarity score is determining based on one or more semantic similarity criteria between the synthetic AI model instruction and one of the predetermined AI model instructions; and
applying the last iteration DP synthetic AI model instructions in the second generative AI model to iteratively generating the DP synthetic data into the last iteration DP synthetic data.

8. The data processing system of any of claims 1-7, wherein the one or more semantic similarity criteria include at least one of intent, document type, phrasing, idiomatic expression, length, specificity, persona, tone, style, domain specific term, or written quality.

9. The data processing system of any of claims 1-8, wherein the second generative AI model is off-the-shelf and API-based and optionally the first generative AI model is used as the second generative AI model.

10. A method comprising:
prompting (402) a first generative artificial intelligence 'AI' model to generate random sample data based on seed data;
inputting (404) the random sample data and private data to a second generative AI model;
prompting (406) the second generative AI model to iteratively generate differential privacy 'DP' synthetic data into a last iteration DP synthetic data by: determining a semantic similarity score per synthetic sample in the DP synthetic data, selecting one or more synthetic samples with higher semantic similarity scores among the DP synthetic data, generating a plurality of variations for each of the selected one or more synthetic samples, and using the variations for a subsequent iteration, wherein the semantic similarity score is determined based on one or more semantic similarity criteria between the synthetic sample and a private sample in the private data; and
applying (408) the last iteration DP synthetic data to improve at least one of an AI model or an AI system.

11. The method of claim 10, wherein each of the one or more semantic similarity criteria corresponds to a dimension of a first multidimensional histogram,
wherein determining the semantic similarity score per synthetic sample includes voting by each private sample in the private data per dimension a most semantically similar synthetic sample among the DP synthetic data, counting first votes for the synthetic sample across dimensions, adding first noise to the first votes to ensure DP, plotting the multidimensional histogram based on the first votes and the first noise, and
wherein selecting the one or more synthetic samples includes resampling the DP synthetic data based on the first multidimensional histogram to select the one or more synthetic samples.

12. The method of any of claim 10 or claim 11, further comprising:
prompting the second generative AI model to determine one or more actions associated with one of the one or more semantic similarity criteria to make the DP synthetic data more semantically similar to the private data, to implement the one or more actions on the DP synthetic data, and to use the DP synthetic data after the actions for the subsequent iteration.

13. The method of any of claims 10-12, wherein the one or more actions include varying the one of the one or more semantic similarity criteria for the synthetic sample to make the synthetic sample more semantically similar to the private sample.

14. The method of any of claims 10-13, wherein each of the one or more actions corresponds to a dimension of a second multidimensional histogram,
wherein determining the one or more actions includes voting by each private sample in the private data per dimension at least one effective action among the one or more actions to make the synthetic sample more semantically similar to the private sample, counting second votes for the synthetic sample across dimensions, adding second noise to the second votes to ensure DP, plotting the second multidimensional histogram based on the second votes and the second noise, and
wherein generating the plurality of variations includes rephrasing the DP synthetic sample based on the second multidimensional histogram.

15. A non-transitory computer readable medium (630) on which are stored instructions (616) that, when executed, cause a programmable device (600) to perform steps of any one of preceding method claims..
